# EUROPEAN PATENT APPLICATION

(11) **EP 4 625 678 A1**
(43) Date of publication of application: **01.10.2025**
(21) Application number: 23894423.5
(22) Date of filing: 08.11.2023
(51) Int. Cl.: H01M 50/531, H01M 4/38, H01M 4/48, H01M 10/0587, H01M 50/107, H01M 50/35

(54) **CYLINDRICAL NONAQUEOUS ELECTROLYTE SECONDARY BATTERY**

(30) Priority: 25.11.2022 JP 2022188338
(71) Applicant: Panasonic Energy Co., Ltd., Osaka 570-8511 (JP)
(72) Inventor: TANI Yuji, Kadoma-shi, Osaka 571-0057 (JP); KIDA Tatsuya, Kadoma-shi, Osaka 571-0057 (JP); HORIUCHI Yuto, Kadoma-shi, Osaka 571-0057 (JP)
(74) Representative: Eisenführ Speiser
(86) International application number: PCT/JP2023/040179
(87) International publication number: WO 2024/111413

(57) **Abstract**

A non-aqueous electrolyte secondary battery according to one embodiment of the present invention comprises an electrode body configured by winding a positive electrode (11) and a negative electrode (12) in which a negative electrode mixture layer (41) is formed on a negative electrode core body (40). The negative electrode (12) includes a non-facing portion (12a) which is wound 1.25 turns or more without facing the positive electrode (11). The non-facing portion (12a) has: a negative electrode mixture layer forming portion (12c) in which the negative electrode mixture layer (41) is formed continuously from the winding outer-end to the winding inner-end side and which is wound 0.5 turns or more; and a negative electrode core body exposed portion (12d) in which the negative electrode mixture layer (41) is not formed continuously from the winding inner-end to the winding outer-end side on both surfaces of the negative electrode core body (40). A negative electrode lead (21) is connected to the negative electrode core body exposed portion (12d) along a direction inclined at an angle θ with respect to the width direction of the negative electrode (12). In the width direction of the negative electrode (12), the length of a portion, of the negative electrode lead (21), connected to the negative electrode core body exposed portion (12d) is at least 70% the width of the negative electrode (12).

## Description

### TECHNICAL FIELD

The present disclosure relates to a cylindrical non-aqueous electrolyte secondary battery.

### BACKGROUND ART

A cylindrical non-aqueous electrolyte secondary battery comprises an electrode assembly in which a positive electrode and a negative electrode are wound through a separator, and is formed by the electrode assembly being housed in an exterior can. Patent Literature 1 discloses a non-aqueous electrolyte secondary battery in which the negative electrode includes a non-facing portion that does not face the positive electrode on the winding inner end side of the electrode assembly, and the non-facing portion is wound 2 turns or more.

### CITATION LIST

### PATENT LITERATURE

PATENT LITERATURE 1: Japanese Unexamined Patent Application Publication No. 2013-137946

### SUMMARY

A hollow part of a winding core portion of a cylindrical non-aqueous electrolyte secondary battery can function as an exhaust path for exhausting the gas inside the battery to the outside. If the winding core portion of the electrode assembly becomes blocked due to deformation of the electrode assembly caused by charging and discharging, the exhaust path to the outside via the winding core portion cannot be sufficiently ensured, and the gas inside the battery may not be smoothly exhausted to the outside. Therefore, it is an advantage of the present disclosure to provide a cylindrical non-aqueous electrolyte secondary battery that can suppress blockage of the winding core portion of the electrode assembly and smoothly exhaust the gas inside the battery to the outside via the winding core portion.

The non-aqueous electrolyte secondary battery according to the present disclosure comprises: an electrode assembly in which a positive electrode and a negative electrode are wound through a separator, the negative electrode including a negative electrode mixture layer formed on a negative electrode core; a nonaqueous electrolyte; and an exterior can that houses the electrode assembly and the nonaqueous electrolyte. The negative electrode includes a non-facing portion wound 1.25 turns or more at a winding inner end side of the electrode assembly without facing the positive electrode through the separator. The non-facing portion includes: a negative electrode mixture layer forming portion in which the negative electrode mixture layer is formed on at least one surface of the negative electrode core continuously from a winding outer end toward a winding inner end of the non-facing portion and which is wound 0.5 turns or more, and a negative electrode core exposed portion in which the negative electrode mixture layer is not formed continuously from the winding inner end toward the winding outer end on both surfaces of the negative electrode core. A negative electrode lead is connected to the negative electrode core exposed portion along a direction inclined at a predetermined angle with respect to the width direction of the negative electrode. The length of a portion where the negative electrode lead is connected to the negative electrode core exposed portion in the width direction of the negative electrode is greater than or equal to 70% of the width of the negative electrode.

According to the cylindrical non-aqueous electrolyte secondary battery of the present disclosure, the blockage of the winding core portion of the electrode assembly can be suppressed, and gas can be smoothly discharged to the outside via the winding core portion.

### BRIEF DESCRIPTION OF DRAWING

FIG. 1 is an axial sectional view of a cylindrical non-aqueous electrolyte secondary battery as an example of an embodiment.
FIG. 2 is a plan view illustrating a winding structure on a winding inner end side of an electrode assembly as an example of an embodiment.
FIG. 3 is a view illustrating a portion on the winding inner end side of the electrode assembly as an example of an embodiment in an expanded state.

### DESCRIPTION OF EMBODIMENTS

As described above, a non-aqueous electrolyte secondary battery is known to include a non-facing portion in which a negative electrode does not face a positive electrode on the winding inner end side of the electrode assembly. Since no charge-discharge reaction occurs at the non-facing portion, a stable winding core portion can be formed by lengthening the non-facing portion. Thereby, high-temperature gas generated during anomalous heat generation of the battery is guided in a direction toward the upper part of the battery via the winding core portion and discharged to the outside. Meanwhile, in the field of nonaqueous electrolyte secondary batteries in recent years, growing demand for safety has led to the need to develop a technology that can further suppress blockage of the winding core portion of the electrode assembly and smoothly exhaust gas to the outside.

The present inventors have found that blockage of the winding core portion can be highly suppressed by connecting the negative electrode lead along a direction inclined at a predetermined angle with respect to the width direction of the negative electrode, while forming the non-facing portion, and making the length of the connecting portion of the negative electrode lead in the width direction of the negative electrode greater than or equal to 70% of the width of the negative electrode. In this case, the shape of the winding core portion is thought to be maintained because the negative electrode lead, having higher rigidity than the negative electrode, is spirally wound around the winding core portion.

Hereinafter, an example of an embodiment of the cylindrical non-aqueous electrolyte secondary battery according to the present disclosure will be described in detail with reference to the drawings. The following embodiment is only an example, and the present disclosure is not limited to the following embodiment. In addition, a form resulting from a selective combination of components of the following embodiment is included in the present disclosure.

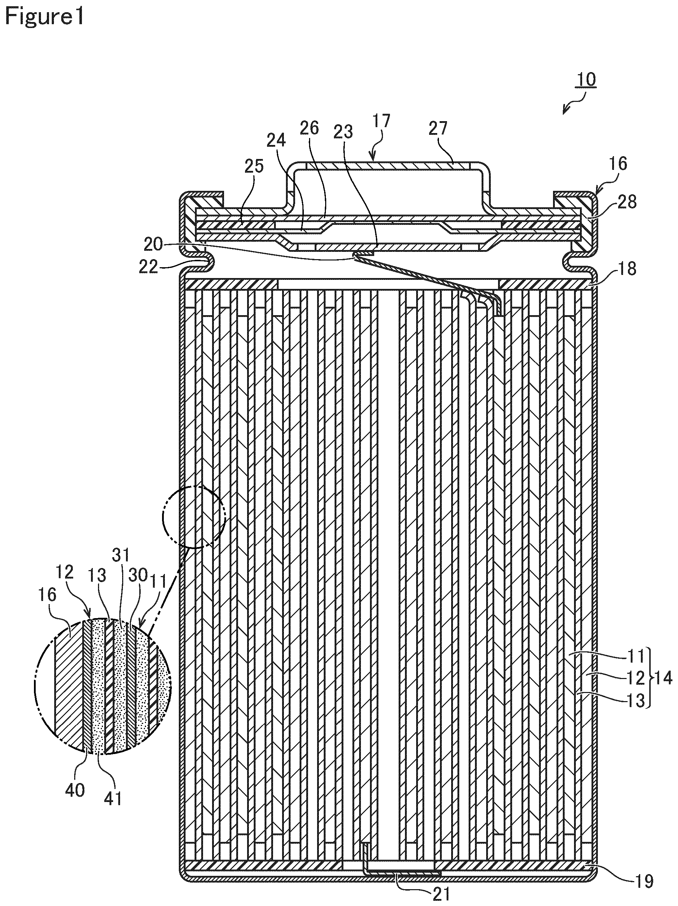

FIG. 1 is a view schematically illustrating a cross section of a cylindrical non-aqueous electrolyte secondary battery (hereinafter simply referred to as a battery) 10 as an example of the embodiment. As illustrated in FIG. 1, the battery 10 comprises an electrode assembly 14, a nonaqueous electrolyte (not illustrated), and an exterior can 16 that houses the electrode assembly 14 and the nonaqueous electrolyte. The electrode assembly 14 includes a positive electrode 11, a negative electrode 12, and a separator 13, and has a structure in which the positive electrode 11 and the negative electrode 12 are wound in a spiral shape through the separator 13. The exterior can 16 is a bottomed cylindrical metal container with an opening on one axial side, and the opening of the exterior can 16 is closed by a sealing assembly 17. In FIG. 1, to make the arrangement relationship of the positive electrode 11, the negative electrode 12, and the separator 13 in the electrode assembly 14 easier to understand, the number of winding turns is reduced compared to the actual case. In the following description, the side of the sealing assembly 17 in the axial direction (height direction) direction of battery 10 is referred to as "upper", and the bottom side of the exterior can 16 in the axial direction is referred to as "lower".

The nonaqueous electrolyte contains a nonaqueous solvent and an electrolyte salt dissolved in the nonaqueous solvent. For example, esters, ethers, nitriles, amides, and mixed solvents of two or more of these may be used as the nonaqueous solvent. The nonaqueous solvent may contain a halogen substitute obtained by substituting at least some of the hydrogen atoms of these solvents with halogen atoms such as fluorine. Note that the nonaqueous electrolyte is not limited to a liquid electrolyte and may be a solid electrolyte using a gel-like polymer or the like. A lithium salt such as LiPF₆ is used as the electrolyte salt.

The positive electrode 11, the negative electrode 12, and the separator 13 constituting the electrode assembly 14 are all belt-shaped long bodies, and are alternately laminated in the radial direction of the electrode assembly 14 by being wound in a spiral shape. The negative electrode 12 is formed one size larger than the positive electrode 11 to prevent precipitation of lithium. That is, the negative electrode 12 is formed longer than the positive electrode 11 in the longitudinal direction and the width direction (short-side direction). The separator 13 is formed at least one size larger than the positive electrode 11, and two separators 13 are arranged to sandwich the positive electrode 11. The battery 10 comprises insulating plates 18, 19 arranged above and below the electrode assembly 14, respectively.

The positive electrode 11 includes a positive electrode core 30 and a positive electrode mixture layer 31 formed on the positive electrode core 30. For the positive electrode core 30, a foil of a metal that is stable in the potential range of the positive electrode 11, such as aluminum or aluminum alloy, a film with the metal disposed on the surface layer, or the like can be used. The positive electrode mixture layer 31 contains a positive electrode active material, a conductive agent, and a binder. The positive electrode 11 can be prepared, for example, by: applying a positive electrode mixture slurry containing a positive electrode active material, a conductive agent, a binder, and the like onto the positive electrode core 30 to form a coating film; drying the coating film; and then compressing the coating film to form a positive electrode mixture layer 31 on both surfaces of the positive electrode core 30.

The positive electrode mixture layer 31 contains a particulate lithium metal composite oxide as the positive electrode active material. The lithium metal composite oxide is a composite oxide containing metal elements such as Co, Mn, Ni, and Al in addition to Li. The metal element constituting the lithium metal composite oxide is at least one selected from, for example, Mg, Al, Ca, Sc, Ti, V, Cr, Mn, Fe, Co, Ni, Cu, Zn, Ga, Ge, Y, Zr, Sn, Sb, W, Pb, and Bi. Among them, at least one selected from Co, Ni, Al, and Mn is preferably contained. Examples of suitable composite oxides include a lithium metal composite oxide containing Ni, Co, and Mn, and a lithium metal composite oxide containing Ni, Co, and Al.

Examples of the conductive agent contained in the positive electrode mixture layer 31 include carbon black such as acetylene black and Ketchen black, carbon materials such as graphite, carbon nanotubes (CNT), carbon nanofibers, and graphene. Examples of the binder contained in the positive electrode mixture layer 31 include fluorine-containing resins such as polytetrafluoroethylene (PTFE), polyvinylidene fluoride (PVDF), polyacrylonitrile (PAN), polyimide, acrylic resin, and polyolefin. These resins may be used together with carboxymethyl cellulose (CMC) or its salt, polyethylene oxide (PEO), or the like.

The negative electrode 12 includes a negative electrode core 40 and a negative electrode mixture layer 41 formed on the negative electrode core 40. For the negative electrode core 40, a foil of a metal that is stable in the potential range of the negative electrode 12, such as copper or copper alloy, a film with the metal disposed on the surface layer, or the like can be used. The negative electrode mixture layer 41 contains a negative electrode active material, a binder, and, if necessary, a conductive agent. The negative electrode 12 can be prepared by: applying the negative electrode mixture slurry containing a negative electrode active material, a binder, and the like to the surface of the negative electrode core 40 to form a coating film; drying the coating film; and then compressing the coating film to form the negative electrode mixture layer 41 on both surfaces of the negative electrode core 40.

The negative electrode mixture layer 41 preferably contains a carbon material and a silicon-containing material as the negative electrode active material. The combination of the carbon material and the silicon-containing material makes it easier to achieve both high capacity and excellent cycle characteristics. In the negative electrode mixture layer 41, for example, a material containing at least one of an element alloying with Li such as Sn or a material containing the element may be used as the negative electrode active material.

From the viewpoint of high capacity, the content of the silicon-containing material is preferably greater than or equal to 5 mass% of the total mass of the negative electrode active material. In general, a silicon-containing material has a higher expansion rate during charging and discharging than a carbon material, and thus the winding core portion of electrode assembly 14 tends to become blocked when charging and discharging are repeated. Although details will be described later, in the present embodiment, the highly rigid negative electrode lead 21 surrounds the winding core portion, suppressing the blockage of the winding core portion even when charging and discharging are repeated. Therefore, the effect of the present disclosure is remarkable when the silicon-containing material is included as the negative electrode active material.

The carbon material that functions as the negative electrode active material is, for example, at least one selected from the group consisting of natural graphite, artificial graphite, soft carbon, and hard carbon. Among them, at least artificial graphite such as massive artificial graphite (MAG), graphitized mesophase carbon microbeads (MCMB), natural graphite such as scaly graphite, massive graphite, earthy graphite, or a mixture of these materials is preferably used as the carbon material. The volume standard D50 of the carbon material is, for example, greater than or equal to 1 µm and less than or equal to 30 µm, and preferably, greater than or equal to 5 µm and less than or equal to 25 µm.

The silicon-containing material may be any material containing Si, examples of which include a silicon alloy, a silicon compound, and a composite material containing Si. Among them, a composite material containing Si is preferably used. The D50 of the composite material is generally smaller than the D50 of graphite. The D50 of the volume standard of the composite material is, for example, 1 µm to 15 µm. As the silicon-containing material, one type may be used alone, or two or more may be used in combination.

A suitable silicon-containing material (composite material) is a composite particle that includes an ionic conductive phase, a Si phase dispersed in the ionic conductive phase, and a conductive layer covering the surface of the ionic conductive phase. The ionic conductive phase is, for example, at least one selected from the group consisting of a silicate phase, an amorphous carbon phase, a silicide phase, and a silicon oxide phase. The Si phase is formed by dispersing Si into fine particles. The ionic conductive phase is a continuous phase formed by a collection of particles that are smaller than the Si phase. The conductive layer is made of a material with higher conductivity than the ionic conductive phase and forms an effective conductive path in the negative electrode mixture layer 41.

An example of a suitable composite material containing Si is a composite particle having a sea-island structure, where fine Si is approximately uniformly dispersed in an amorphous silicon oxide phase, and is represented by the general formula SiOₓ (0 < x ≤ 2) as a whole. The main component of the silicon oxide may be silicon dioxide. The content ratio (x) of oxygen to Si is, for example, 0.5 ≤ x < 2.0, and preferably 0.8 ≤ x ≤ 1.5.

As the binder contained in the negative electrode mixture layer 41, fluorine-containing resin, PAN, polyimide, acrylic resin, polyolefin, or the like may be used as in the case of the positive electrode mixture layer 31, but styrene butadiene rubber (SBR) is preferably used. The negative electrode mixture layer 41 preferably contains CMC or its salt, polyacrylic acid (PAA) or its salt, polyvinyl alcohol (PVA), or the like. Among them, SBR is preferably used together with CMC or its salt, PAA or its salt, or the like. The negative electrode mixture layer 41 may contain a conductive agent such as CNT.

A porous sheet having ionic permeability and insulation is used for the separator 13. Specific examples of the porous sheets include microporous thin films, woven fabrics, nonwoven fabrics, and the like. Polyolefins such as polyethylene and polypropylene, cellulose, and the like are suitable as materials for the separator 13. The separator 13 may have a single-layer structure or a multi-layer structure. A resin layer having high heat resistance such as aramid resin may be formed on the surface of the separator 13. A filler layer containing an inorganic filler may be formed on the interface between the separator 13 and at least one of the positive electrode 11 or the negative electrode 12.

A positive electrode lead 20 is connected to the positive electrode 11, and a negative electrode lead 21 is connected to the winding inner end side of the negative electrode 12. The positive electrode lead 20 extends toward the sealing assembly 17 through the through hole of the insulating plate 18, and the negative electrode lead 21 extends toward the bottom of the exterior can 16 through the through hole of the insulating plate 19. The positive electrode lead 20 is connected to the lower surface of an internal terminal plate 23 of the sealing assembly 17 by welding or the like. A cap 27 constituting the top plate of the sealing assembly 17 is electrically connected to the internal terminal plate 23, and the cap 27 serves as a positive electrode terminal. The negative electrode lead 21 is connected to the inner surface of the bottom of the metal exterior can 16 by welding or the like, and the exterior can 16 serves as a negative electrode terminal.

In the present embodiment, the negative electrode lead 21 is electrically connected to the winding inner end side of the negative electrode 12, and the negative electrode core 40 on the winding outer end side of the negative electrode 12 is brought into contact with the inner surface of the exterior can 16. In this manner, both the winding inner end side and the winding outer end side of the negative electrode 12 are electrically connected to the negative electrode terminal, thereby shortening the current path and reducing the electric resistance. Note that one negative electrode lead 21 may be electrically connected to the winding inner end side of the negative electrode 12 without bringing the negative electrode core 40 on the winding outer end side of the negative electrode 12 into contact with the inner surface of the exterior can 16.

As described above, the exterior can 16 is a bottomed cylindrical metal container with an opening on one axial side. A gasket 28 is provided between the exterior can 16 and the sealing assembly 17 to ensure the sealing inside the battery and the insulation between the exterior can 16 and the sealing assembly 17. The exterior can 16 is formed with a grooved portion 22, which has a part of the side surface portion protruding inward and supports the sealing assembly 17. The grooved portion 22 is preferably annularly formed along the circumferential direction of the exterior can 16 and supports the sealing assembly 17 on its upper surface. The sealing assembly 17 is fixed to the top of the exterior can 16 by a grooved portion 22 and an opening end portion of the exterior can 16 tightened to the sealing assembly 17.

The sealing assembly 17 has a structure in which the internal terminal plate 23, a lower vent member 24, an insulating member 25, an upper vent member 26, and a cap 27 are laminated in order from the electrode assembly 14 side. Each member constituting the sealing assembly 17 has a disk shape or a ring shape, for example, and each member except the insulating member 25 is electrically connected to each other. The lower vent member 24 and the upper vent member 26 are connected to each other at a central part, and the insulating member 25 is interposed between the peripheral part of each. When an anomaly occurs in the battery 10 and the internal pressure rises, the lower vent member 24 deforms and ruptures to push the upper vent member 26 toward the cap 27, thereby interrupting the current path between the lower vent member 24 and the upper vent member 26. When the internal pressure rises further, the upper vent member 26 ruptures, and gas is discharged from the opening portion of the cap 27.

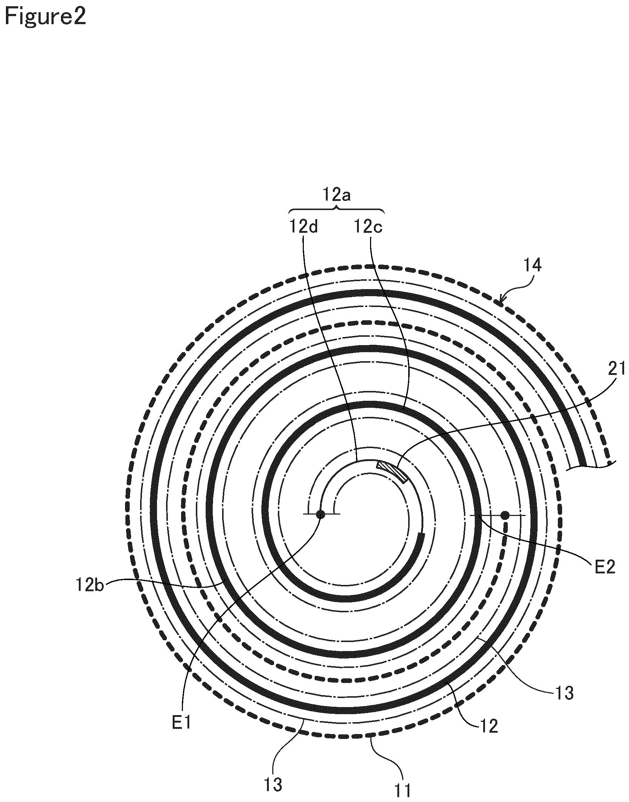

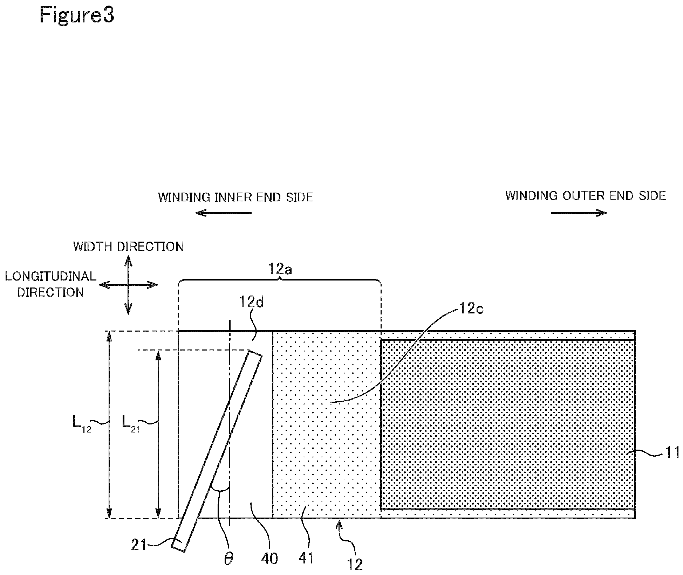

Hereinafter, the electrode assembly 14 will be described in detail with reference to FIGS. 2 and 3.

FIG. 2 is a plan view illustrating the winding structure on the winding inner end side of the electrode assembly 14. FIG. 3 is a view illustrating the facing relationship between the positive electrode 11 and the negative electrode 12 by developing the portion of the electrode assembly 14 on the winding inner end side. In FIG. 2, the negative electrode 12 is indicated by a solid line, the positive electrode 11 is indicated by a dashed line, and the separator 13 is indicated by a dash-dotted line to make the arrangement relationship easier to understand. In FIG. 2, the gap between the positive electrode 11, the negative electrode 12, and the separator 13 is exaggerated.

As illustrated in FIGS. 2 and 3, only the negative electrode 12 out of the positive electrode 11 and the negative electrode 12 is disposed on the winding inner end side of the electrode assembly 14. Specifically, the negative electrode 12 includes a non-facing portion 12a wound 1.25 turns or more from the winding inner end of the negative electrode 12 without facing the positive electrode 11 through the separator 13. The winding inner end of the negative electrode 12 coincides with a winding inner end E1 of the non-facing portion 12a. The non-facing portion 12a is preferably wound 2 turns or less and more preferably 1.5 turns or less. In the present embodiment, as illustrated in FIG. 2, the negative electrode 12 includes the non-facing portion 12a wound 1.5 turns from the winding inner end E1, and a facing portion 12b wound continuously from a winding outer end E2 of the non-facing portion 12a and facing the positive electrode 11 through the separator 13.

The non-facing portion 12a includes a negative electrode mixture layer forming portion 12c and a negative electrode core exposed portion 12d. The negative electrode mixture layer forming portion 12c is a portion where the negative electrode mixture layer 41 is formed on at least one surface of the negative electrode core 40 continuously from the winding outer end E2 toward the winding inner end of the non-facing portion 12a. The negative electrode core exposed portion 12d is a portion where the negative electrode mixture layer 41 is not formed on both surfaces of the negative electrode core 40 continuously from the winding inner end E1 to the winding outer end E2 side of the non-facing portion 12a. The negative electrode lead 21 is connected to the winding inner surface of the negative electrode core exposed portion 12d. In FIG. 2, the thick solid line indicates the negative electrode mixture layer forming portion 12c, and the thin solid line indicates the negative electrode core exposed portion 12d.

The negative electrode mixture layer forming portion 12c is wound 0.5 turns or more, preferably 0.75 turns or more. Since the positive electrode 11 does not face either surface of the negative electrode mixture layer forming portion 12c, the negative electrode mixture layer forming portion 12c does not react with the positive electrode 11 when an anomaly occurs in the battery. As a result, the negative electrode mixture layer forming portion 12c remains cylindrical in the winding core portion of the electrode assembly 14. The negative electrode mixture layer forming portion 12c has higher strength than the negative electrode core exposed portion 12d, where only the negative electrode core is exposed on both surfaces. Therefore, the portion remaining cylindrical serves as an exhaust passage, enabling the gas generated during anomalous battery heat generation or the like to be guided upward and exhausted efficiently.

As illustrated in FIG. 3, the negative electrode lead 21 is connected to the negative electrode core exposed portion 12d along a direction inclined at an angle θ with respect to the width direction of the negative electrode 12. Thus, when the negative electrode 12 is wound, the negative electrode lead 21 is spirally wound around the winding core portion. The negative electrode lead 21 has higher rigidity than the negative electrode 12, blockage of the winding core portion is suppressed, and safety is improved.

The angle θ is preferably greater than or equal to 5°, more preferably greater than or equal to 10°, and still more preferably greater than or equal to 15°. By setting the angle θ to greater than or equal to 5°, when the negative electrode 12 is wound, the number of turns by which the negative electrode lead 21 winds around the winding core portion increases, and blockage of the winding core portion is highly suppressed. From the viewpoint of preventing short circuits, the angle θ is preferably less than or equal to 45°, and more preferably less than or equal to 40°. Therefore, an example of a preferable range of the angle θ is greater than or equal to 5° and less than or equal to 45°, and is greater than or equal to 10° and less than or equal to 45° when the suppression of blockage of the winding core portion is prioritized.

As illustrated in FIG. 3, in the width direction of the negative electrode 12, the length (L₂₁) of the portion where the negative electrode lead 21 is connected to the negative electrode core exposed portion 12d is greater than or equal to 70% of the width (L₁₂) of the negative electrode 12. Thus, when the negative electrode 12 is wound, the number of turns by which the negative electrode lead 21 winds around the winding core portion increases, and blockage of the winding core portion is suppressed. From the viewpoint of suppressing blockage of the winding core portion, the length (L₂₁) of the portion where the negative electrode lead 21 is connected to the negative electrode core exposed portion 12d is preferably greater than or equal to 75% of the width (L₁₂) of the negative electrode 12, and more preferably greater than or equal to 80%. In addition, the length (L₂₁) of the portion where the negative electrode lead 21 is connected to the negative electrode core exposed portion 12d may be 100% of the width (L₁₂) of the negative electrode 12, that is, the negative electrode lead 21 may be connected across the width direction of the negative electrode 12.

In the present embodiment, the negative electrode lead 21 is connected to the negative electrode core exposed portion 12d so that the upper end of the negative electrode lead 21 is inclined toward the winding outer end, but this is not restrictive. The negative electrode lead 21 may be connected to the negative electrode core exposed portion 12d so that the upper end of the negative electrode lead 21 is inclined toward the winding inner end.

In the present embodiment, the entire negative electrode lead 21 is disposed along the direction inclined at the angle θ with respect to the width direction of the negative electrode 12, but this is not restrictive. For example, only a portion of the negative electrode lead 21 connected to the negative electrode core exposed portion 12d may be connected along a predetermined inclined direction with respect to the width direction of the negative electrode 12, and a portion protruding downward from the negative electrode core exposed portion 12d may be disposed along the width direction of the negative electrode 12. For example, only a part of the portion connected to the negative electrode core exposed portion 12d may be connected along a predetermined inclined direction with respect to the width direction of the negative electrode 12. When only a part of the portion connected to the negative electrode core exposed portion 12d is inclined with respect to the width direction of the negative electrode 12, the length of the inclined part in the width direction of the negative electrode 12 is preferably greater than or equal to 70% of the width of the negative electrode 12 from the viewpoint of suppressing blockage of the winding core portion.

### EXAMPLES

Hereinafter, the present disclosure will be further described through examples, but the present disclosure is not limited to these examples.

### <Example 1>

### [Preparation of Positive Electrode]

Aluminum-containing lithium nickel-cobaltate (LiNi_{0.88}Co_{0.09}A_{10.03}O₂) was used as a positive electrode active material. A positive electrode mixture slurry was prepared by mixing 100 parts by mass of LiNi_{0.88}Co_{0.09}Al_{0.03}O₂ as a positive electrode active material, 1.0 parts by mass of acetylene black as a conductive agent, and 0.9 parts by mass of polyvinylidene fluoride (PVDF) as a binder in a dispersion medium of N-methylpyrrolidone (NMP). The prepared positive electrode mixture slurry was uniformly applied to both surfaces of the positive electrode core of aluminum foil with a thickness of 15 µm. Next, NMP was removed in a dryer at 100 °C to 150°C, and then compression was performed with a roll press to prepare a positive electrode plate. The positive electrode plate was cut to 0.144 mm thick, 62.6 mm wide, and 860 mm long to prepare a positive electrode.

### [Preparation of Negative Electrode]

Graphite powder and Si oxide were mixed to have proportions of 95 parts by mass and 5 parts by mass, respectively. A negative electrode mixture slurry was prepared by mixing 100 parts by mass of a negative electrode active material, 1 part by mass of CMC as a thickener, and 1 part by mass of styrene-butadiene rubber as a binder in water. The negative electrode mixture slurry was applied to both surfaces of an 8 µm thick copper foil negative electrode core to form a negative electrode mixture layer. Then, the negative electrode mixture layer was dried and then compressed with a compression roller so that the negative electrode thickness was 0.160 mm, thereby preparing a negative electrode. The negative electrode plate was cut to 64.2 mm wide and 959 mm long to prepare a negative electrode.

### [Attachment of Negative Electrode Lead]

As illustrated in FIG. 3, a nickel negative electrode lead was attached to a negative electrode core exposed portion on the winding inner end side of the negative electrode, along a direction inclined at θ = 30° with respect to the width direction of the negative electrode. The length of the portion of the negative electrode lead in Example 1 connected to the negative electrode core exposed portion in the width direction of the negative electrode was 90% of the width of the negative electrode.

### [Preparation of Electrode Assembly]

The positive electrode and the negative electrode were wound via a polyethylene separator, and a polypropylene (PP) tape having a width of 12 mm, a thickness of 30 µm, and a length of 50.0 mm was attached to the outermost periphery within 10 mm of both end portions of the electrode assembly. At this time, the electrode assembly was prepared such that the winding structure on the winding inner end side corresponded to the structure illustrated in FIG. 2, and the negative electrode core exposed portion was placed on the outermost periphery of the electrode assembly.

### [Preparation of Nonaqueous Electrolyte]

A nonaqueous electrolyte was prepared by adding 5 parts by mass of vinylene carbonate (VC) to 100 parts by mass of a mixed solvent (EC: DMC = 1:3 by volume) containing ethylene carbonate (EC) and dimethyl carbonate (DMC), and dissolving 1.5 mol/L of LiPF₆.

### [Preparation of Non-aqueous electrolyte secondary battery]

Insulating plates were placed at the top and bottom of the electrode assembly, and the negative electrode lead was welded to an exterior can, and the positive electrode lead was welded to the sealing assembly with an internal pressure operated safety vent, and stored inside the exterior can. Thereafter, the nonaqueous electrolyte was injected into the exterior can using the depressurization method. Finally, a cylindrical non-aqueous electrolyte secondary battery was produced by crimping the opening end portion of the exterior can with the sealing plate via a gasket. The capacity of the battery was 4600 mAh.

### <Example 2>

As illustrated in FIG. 3, a nickel negative electrode lead was attached to a negative electrode core exposed portion on the winding inner end side of the negative electrode, along a direction inclined at θ = 30° with respect to the width direction of the negative electrode. The length of the portion of the negative electrode lead in Example 2 connected to the negative electrode core exposed portion in the width direction of the negative electrode was 70% of the width of the negative electrode. The rest of the configuration is the same as in Example 1.

### <Comparative Example 1>

A nickel negative electrode lead was attached to a negative electrode core exposed portion on the winding inner end side of the negative electrode, along a direction parallel (θ = 0°) to the width direction of the negative electrode. The length of the negative electrode lead in Comparative Example 1 connected to the negative electrode core exposed portion in the width direction of the negative electrode was 95% of the width of the negative electrode. The rest of the configuration is the same as in Example 1.

### <Comparative Example 2>

A nickel negative electrode lead was attached to a negative electrode core exposed portion on the winding inner end side of the negative electrode, along a direction parallel (θ = 0°) to the width direction of the negative electrode. The length of the negative electrode lead in Comparative Example 2 connected to the negative electrode core exposed portion in the width direction of the negative electrode was 25% of the width of the negative electrode. The rest of the configuration is the same as in Example 1.

### <Comparative Example 3>

As illustrated in FIG. 3, a nickel negative electrode lead was attached to a negative electrode core exposed portion on the winding inner end side of the negative electrode, along a direction inclined at θ = 30° with respect to the width direction of the negative electrode. The length of the portion of the negative electrode lead inExample 2 connected to the negative electrode core exposed portion in the width direction of the negative electrode was 25% of the width of the negative electrode. The rest of the configuration is the same as in Example 1.

### [Ignition Test]

Each battery was charged at a constant current (CC) of 0.3 C, and then charged at a constant voltage (CV) of 4.2 V until a charge termination current of 0.02 C was reached. Thereafter, the battery in the charged state was placed in a copper tube equipped with a heater and heated to 650°C to ignite the battery. After the ignition, the battery was visually checked for rupture on the can side surface.

**[Table 1]**

| | Placement of negative electrode lead | | Ignition test |
|---|---|---|---|
| | Inclination angle θ [deg] | Ratio of length of negative electrode lead in width direction of negative electrode to negative electrode width [%] | Rupture on can side surface |
| Examplel | 30 | 90 | Absent |
| Example2 | 30 | 70 | Absent |
| Comparative Examplel | 0 | 95 | Present |
| Comparative Example2 | 0 | 25 | Present |
| Comparative Example3 | 30 | 25 | Present |

As shown in Table 1, rupture from the can side surface was confirmed in each of the batteries of Comparative Examples 1 to 3, but no rupture from the can side surface was confirmed in Examples 1 and 2 when the battery was ignited. In the batteries of Examples, it is assumed that the blockage of the winding core portion was suppressed by spirally winding the negative electrode lead around the winding core portion, and gas was discharged to the outside via the winding core portion when the battery was ignited. On the other hand, in the batteries of Comparative Examples, it is assumed that gas was not sufficiently discharged to the outside when the battery was ignited due to the blockage of the winding core portion.

The above test results show the following: the blockage of the winding core portion of the electrode assembly was suppressed by connecting the negative electrode lead along the direction inclined at a predetermined angle with respect to the width direction of the negative electrode; the length of the portion where the negative electrode lead is connected to the negative electrode core exposed portion in the width direction of the negative electrode is greater than or equal to 70% of the width of the negative electrode; and gas can be smoothly discharged to the outside via the winding core portion in the case of an anomaly.

### REFERENCE SIGNS LIST

10 Battery (Non-aqueous electrolyte secondary battery), 11 Positive electrode, 12 Negative electrode, 12a Non-facing portion, 12b Opposing portion, 12c Negative electrode mixture layer forming portion, 12d Negative electrode core exposed portion, 13 Separator, 14 Electrode assembly, 16 Exterior can, 17 Sealing assembly, 18,19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer

## Claims

1. A non-aqueous electrolyte secondary battery comprising:
an electrode assembly in which a positive electrode and a negative electrode are wound through a separator, the negative electrode including a negative electrode mixture layer formed on a negative electrode core;
a nonaqueous electrolyte; and
an exterior can that houses the electrode assembly and the nonaqueous electrolyte, wherein
the negative electrode includes a non-facing portion wound 1.25 turns or more at a winding inner end side of the electrode assembly without facing the positive electrode through the separator,
the non-facing portion includes
a negative electrode mixture layer forming portion in which the negative electrode mixture layer is formed on at least one surface of the negative electrode core continuously from a winding outer end toward a winding inner end of the non-facing portion, the negative electrode mixture layer forming portion being wound 0.5 turns or more, and
a negative electrode core exposed portion in which the negative electrode mixture layer is not formed continuously from the winding inner end toward the winding outer end on both surfaces of the negative electrode core,
a negative electrode lead is connected to the negative electrode core exposed portion along a direction inclined at a predetermined angle with respect to a width direction of the negative electrode, and
a length of a portion where the negative electrode lead is connected to the negative electrode core exposed portion in the width direction of the negative electrode is greater than or equal to 70% of a width of the negative electrode.

2. The non-aqueous electrolyte secondary battery according to claim 1, wherein the negative electrode lead is connected to the negative electrode core exposed portion along a direction inclined at greater than or equal to 5° and less than or equal to 45° with respect to the width direction of the negative electrode.

3. The non-aqueous electrolyte secondary battery according to claim 1 or 2, wherein the negative electrode mixture layer includes a silicon-containing material as a negative electrode active material.

4. The non-aqueous electrolyte secondary battery according to claim 3, wherein a content of the silicon-containing material is greater than or equal to 5 mass% of a total mass of the negative electrode active material.
